(19) Europäisches Patentamt
European Patent Office
Office européen des brevets

(11) **EP 3 823 771 B1**

(12) **EUROPÄISCHE PATENTSCHRIFT**

(45) Veröffentlichungstag und Bekanntmachung des Hinweises auf die Patenterteilung:
**01.03.2023 Patentblatt 2023/09**

(21) Anmeldenummer: **19744655.2**

(22) Anmeldetag: **18.07.2019**

(51) Internationale Patentklassifikation (IPC):
**B21B 37/42** (2006.01) **B21B 1/26** (2006.01)

(52) Gemeinsame Patentklassifikation (CPC):
**B21B 37/42**; B21B 1/26; B21B 13/142; B21B 37/38; B21B 37/40; B21B 2267/18; B21B 2269/04

(86) Internationale Anmeldenummer:
**PCT/EP2019/069449**

(87) Internationale Veröffentlichungsnummer:
**WO 2020/016387 (23.01.2020 Gazette 2020/04)**

(54) **VERFAHREN ZUM ERMITTELN VON STELLGRÖSSEN FÜR AKTIVE PROFIL- UND PLANHEITSSTELLGLIEDER FÜR EIN WALZGERÜST UND VON PROFIL- UND MITTENPLANHEITSWERTEN FÜR WARMGEWALZTES METALLBAND**

METHOD FOR ASCERTAINING CONTROL VARIABLES FOR ACTIVE PROFILE AND FLATNESS CONTROL ELEMENTS FOR A ROLLING STAND AND PROFILE AND AVERAGE FLATNESS VALUES FOR HOT-ROLLED METAL STRIP

PROCÉDÉ PERMETTANT DE DÉTERMINER DES GRANDEURS DE RÉGLAGE POUR DES ÉLÉMENTS ACTIFS DE RÉGLAGE DU PROFIL ET DE LA PLANÉITÉ D'UNE CAGE DE LAMINOIR ET DES VALEURS DE PROFIL ET DE PLANÉITÉ MOYENNE D'UNE BANDE MÉTALLIQUE LAMINÉE À CHAUD

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.07.2018 DE 102018212074**

(43) Veröffentlichungstag der Anmeldung:
**26.05.2021 Patentblatt 2021/21**

(73) Patentinhaber: SMS Group GmbH
**40237 Düsseldorf (DE)**

(72) Erfinder:
• SEIDEL, Jürgen
**57223 Kreuztal (DE)**

• BAUMGÄRTEL, Uwe
**57271 Hilchenbach (DE)**
• WACHSMANN, Ralf
**57076 Siegen (DE)**
• BONEKEMPER, Peter
**57074 Siegen (DE)**

(74) Vertreter: **Klüppel, Walter
Hemmerich & Kollegen
Patentanwälte
Hammerstraße 2
57072 Siegen (DE)**

(56) Entgegenhaltungen:
**EP-A1- 0 121 148 EP-A2- 1 481 742
WO-A1-2006/000290 DE-A1- 19 851 554**

EP 3 823 771 B1

**Beschreibung**

Gebiet der Erfindung

Die Erfindung betrifft ein Verfahren zum Ermitteln von Stellgrößen für aktive Profil- und Planheitsstellglieder für mindestens ein Walzgerüst zum Warmwalzen von Metallband mit einer Mehrzahl von i= 1...I aufeinanderfolgenden Stichen und zum Ermitteln von Profil- und Mittenplanheitswerten für das warmgewalzte Metallband.

Stand der Technik

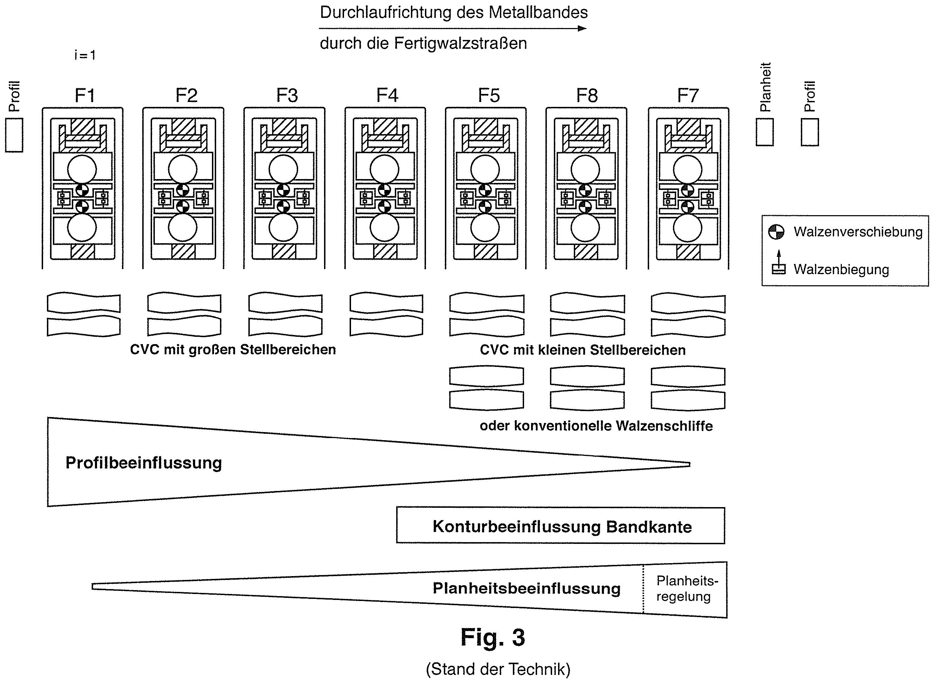

Die Erfindung wird weiter unten unter Verwendung zahlreicher Fachbegriffe beschrieben. Zum besseren Verständnis der Erfindung werden diese Fachbegriffe, die allesamt im Stand der Technik bekannt sind, zunächst unter Bezugnahme auf die Figuren 3 bis 10 erläutert.

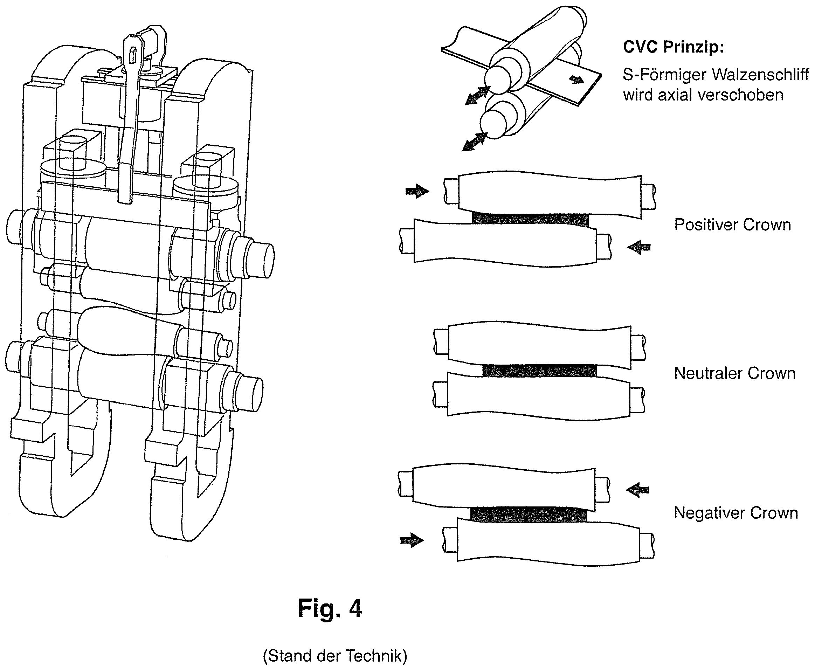

Figur 3 zeigt in schematischer Darstellung eine Fertigwalzstraße zum Warmwalzen von Metallband mit hier beispielhaft sieben Fertigwalzgerüsten F1-F7. Den einzelnen Fertigwalzgerüsten sind jeweils mechanische Stellglieder zugeordnet zum Beeinflussen der Mittenplanheit und/oder des Profils des Metallbandes. Bei den Profil- und Planheitsstellgliedern handelt es sich beispielsweise um Einrichtungen zum axialen Verschieben von Arbeitswalzen, wenn diese einen sogenannten Continuously variabel Crown CVC-Schliff oder einen sogenannten Smart Crown-Schliff besitzen. Figuren 3 und 4 veranschaulichen den CVC- bzw. Smart Crown-Schliff der Arbeitswalzen; Figur 4 veranschaulicht zusätzlich das CVC-Prinzip, bei welchem die S-förmig geschliffenen Arbeitswalzen axial verschoben werden. Weiterhin ist in Figur 3 angedeutet, dass das Profil des Metallbandes mit zunehmender Anzahl der durchlaufenen Fertigwalzgerüste zunehmend schwächer beeinflusst wird. Demgegenüber ist die erlaubte Mittenplanheit insbesondere in den ersten Gerüsten der Fertigwalzstraße besonders hoch, während sie in den hinteren Gerüsten der Fertigwalzstraße zunehmend eingeengt ist.

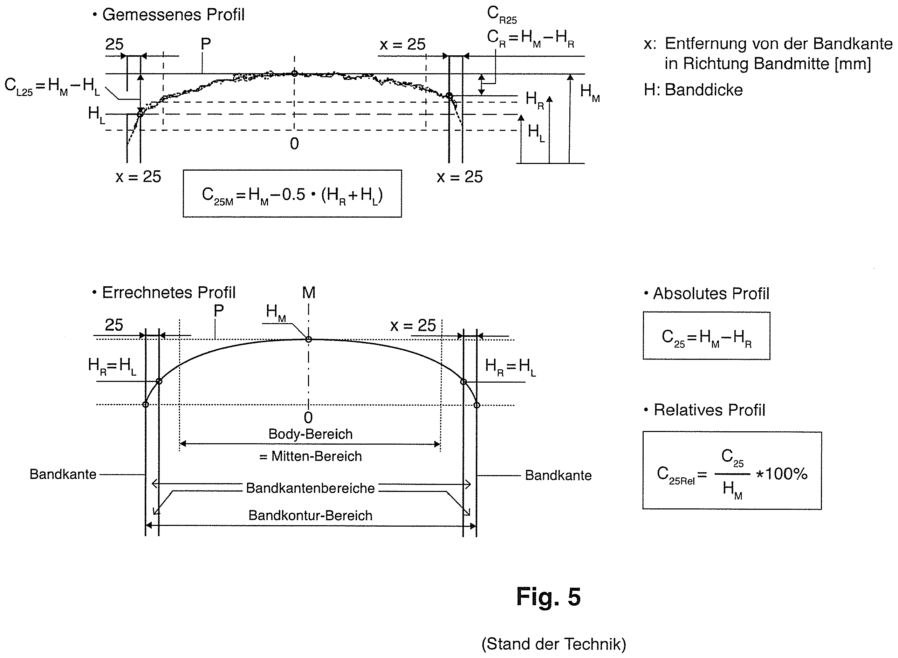

Der Begriff des Profils für ein zu walzendes Metallband wird in Figur 5 erläutert. Es wird unterschieden zwischen dem Begriff "absolutes Profil" und "relatives Profil". Wichtig zu verstehen ist, dass der Begriff "Profil" C hier - im Unterschied zur umgangssprachlichen Bedeutung dieses Begriffes - nicht etwa die Form des Querschnitts des Metallbandes (Bandkontur) meint, sondern tatsächlich den vertikalen Abstand der Oberfläche des Metallbandes von einer fiktiven idealen horizontalen Linie P durch den höchsten Punkt des Profils in der Bandmitte in Breitenrichtung gesehen. Das so definierte Profil bzw. der so definierte vertikale Abstand wird jeweils immer nur an einer konkreten Breitenposition X in einer vorbestimmten Entfernung von der Kante des Metallbandes bestimmt bzw. definiert, z. B. X=25mm. Die absoluten Profilwerte berechnen sich als Differenz der Banddicke $H_M$ in der Breitenmitte des Metallbandes abzüglich der Dicke $H_X$ des Metallbandes in der Entfernung X von der Bandkante nach innen versetzt.

Weiterhin sind in Figur 5 die Begriffe "Body-Bereich", d. h. "Mittenbereich", "Bandkante", "Bandkantenbereiche" und "Bandkontur-Bereich" veranschaulicht.

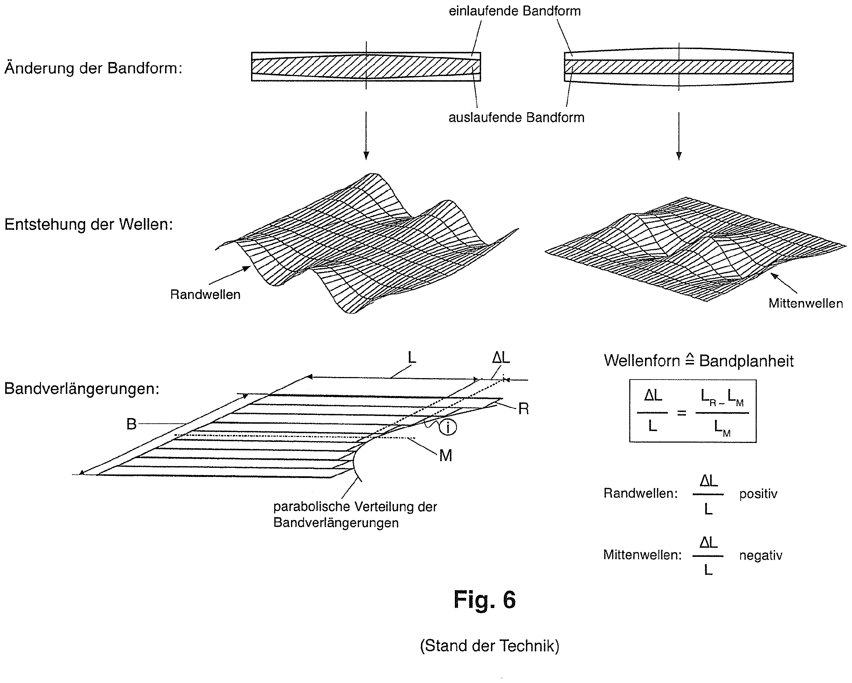

Figur 6 veranschaulicht den Begriff "Welligkeit" bzw. gleichbedeutend "Planheit" des Metallbandes. Beim Durchlaufen eines Walzgerüstes erfährt das Metallband eine Umformung, welche insbesondere eine Änderung seiner Bandform (Kontur) zur Folge haben kann. Zwei Beispiele dafür sind in Figur 6 dargestellt. Je nach Form (Kontur) des Metallbandes vor dem Einlauf in das Fertigwalzgerüst und je nach dort erfahrener Umformung kann die Bandform (Kontur) des auslaufenden Metallbandes unterschiedlich sein. Insbesondere kann das auslaufende Metallband unerwünschte Randwellen oder Mittenwellen aufweisen. Die Ausbildung von Wellenbergen oder Wellentälern bedeutet eine zusätzliche Verlängerung des Bandes gegenüber der gleichmäßigen Verlängerung L bei planem Band (ohne Wellen). Diese Veränderung der Bandlänge über der Bandbreite ist in Figur 6 beispielhaft für ein Band mit Randwellen dargestellt. Es ist insbesondere zu erkennen, dass die Längsstreifen des Metallbandes am Rand gegenüber einer ursprünglichen Ausgangslänge L verlängert sind. Die Verlängerung ist umso größer, je größer die Amplitude der Wellen ausgebildet ist. Über die Breite B des Metallbandes verteilt ergibt sich beispielsweise eine parabolische Verteilung. Die Größe der jeweils auftretenden Bandverlängerung $\Delta L$ in Bezug auf die ursprüngliche Bandlänge L dient als Maß für die Mittenplanheit bzw. Welligkeit des Metallbandes. Ein positives Verhältnis $\Delta L$ zu L repräsentiert Randwellen, während ein negatives Verhältnis $\Delta L$ zu L Mittenwellen repräsentiert.

Das Thema Bandprofil- und Mittenplanheitseinstellung bei (Fertig-) Walzgerüsten wird u. a. in folgenden Druckschriften aus der Patentliteratur behandelt:

In dem europäischen Patent EP 0 591 291 B1 wird eine Formsteuerungsgrade beschrieben. Bei Ansteuerung von Fertigwalzgerüsten entsprechend dieser Geraden wird das relative Bandprofil (Profil dividiert durch Dicke in Prozent) innerhalb einer Walzstraße konstant gehalten und beim Folgen dieser Geraden soll sich besonders bei dünnem Metallband am Ende der Fertigstraße eine gute Planheit einstellen. Das Toleranzfenster, um diese Formsteuerungsgrade ist durch Grenzkurven definiert und kann bei der Profilfindung ausgenutzt werden. Bei kleinen Enddicken ist der Toleranzbereich klein, um die Bandplanheit nicht negativ zu beeinflussen. Die Definition des Bandprofilwertes ist hier entsprechend DIN EN 10051 bezogen auf einen Bezugspunkt von der Kante gegeben. Eine Planheit in einem definierten Mittenbereich des Bandes wird hier nicht betrachtet.

Ähnliches offenbart die Patentanmeldung DE 40 40 360 A1. Auch hier wird beschrieben, dass sich besonders bei dünnen Bändern eine relative Profilkonstanz von Gerüst zu Gerüst ergibt, und dass sich unter akzeptablen Randbedingungen das Profil linear mit der Banddicke verringert.

Das europäische Patent EP 0 850 704 B1 befasst sich mit der Verbesserung der Planheit innerhalb der Fertigwalzstraße. Hier wird eine Ziel- und Planheitsform über der Bandbreite vorgegeben. Es sollen die Unplanheiten auch im Bereich der Bandkante in Grenzen gehalten werden. Die Beschreibung der Planheit erfolgt für den Bodybereich, d. h. den Mittenbereich des Metallbandes, und den Bereich der Bandkanten getrennt. Auch hier sollen die Unplanheiten in definierten Grenzen gehalten werden.

Bei der Einstellung der Walzparameter in einer Fertigwalzstraße mit dem Ziel, auch zunehmend dünnere und/oder höherfeste Metallbänder mit einer guten Mittenplanheit zu walzen, können die folgenden Probleme auftreten:

a)

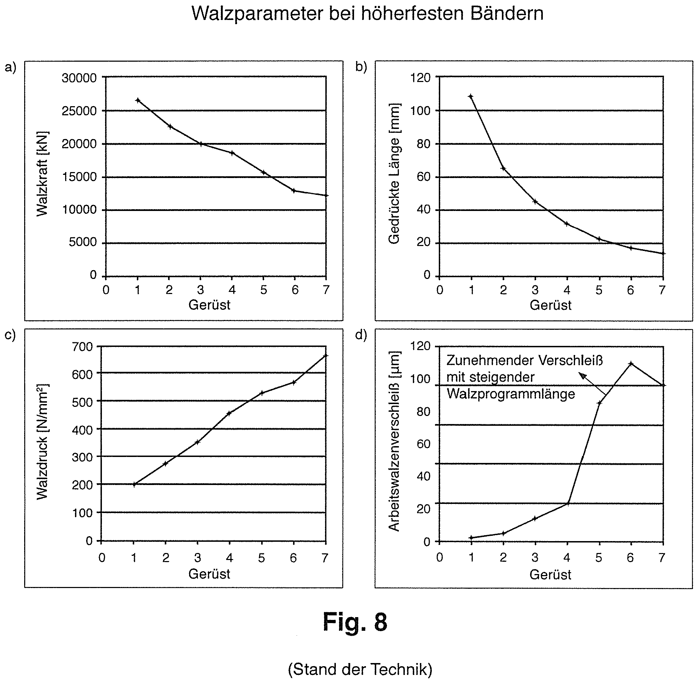

Bei dünnen und/oder hochfesten Metallbändern ist das Walzkraftniveau hoch, wenn derartige Metallbänder in einer Warmband-Fertigwalzstraße gewalzt werden. Die Walzkraft nimmt innerhalb der Walzstraße in der Regel von den vorderen zu den hinteren Fertigwalzgerüsten hin ab; siehe Figur 8a). Die gedrückte Länge, d. h. der Kontaktbereich zwischen Arbeitswalze und Walzgut nimmt entsprechend ebenfalls von den vorderen zu den hinteren Fertigwalzgerüsten ab, sogar überproportional; siehe Figur 8b). Dadurch erhöht sich der Walzdruck, d. h. die Walzkraft dividiert durch die Kontaktfläche (gedrückte Länge mal Bandbreite) vom ersten zum letzten Gerüst; siehe Figur 8c). Dieser Effekt führt zu einer verstärkten Abplattung der Arbeitswalze, die sich profilmäßig im Bandkantenbereich in Form eines steileren Bandkantenabfalls, d. h. in Form einer sogenannten "Kantenanschärfung" auswirkt.

b)

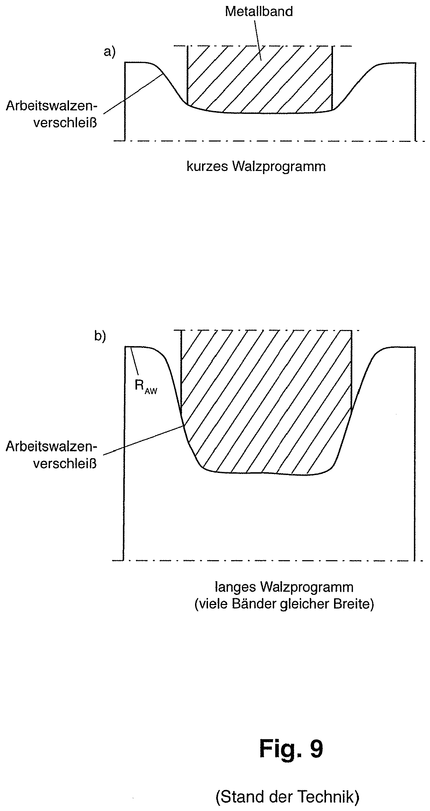

Zusätzlich werden in modernen Fertigwalzstraßen die Walzprogramme verlängert; d. h. die Betriebszeiten der Arbeitswalzen werden damit ebenfalls verlängert. Weil dabei mehr Metallband gleicher Breite fertiggewalzt werden muss, erhöht sich auch der Verschleiß an der Oberfläche der Arbeitswalzen, was zu tieferen Aussparungen an der Walzenoberfläche führt. Im Ergebnis wird dadurch die Kantenanschärfung weiter verstärkt, d. h. der Bandkantenabfall wird steiler; vergleiche Figur 9a) mit Figur 9b).

c)

Schließlich wird auch durch zyklisches Verschieben der Arbeitswalzen von Metallband zu Metallband, besonders bei Passagen innerhalb eines Walzprogrammes mit nahezu konstanter Bandbreite, der Arbeitswalzenverschleiß vergleichmäßigt. Der Arbeitswalzenverschleiß ist insbesondere in den letzten Gerüsten der Fertigwalzstraße relativ hoch; siehe Figur 8d). Dieser Verschleiß der Arbeitswalzen, wie in Figur 8d) und Figur 9 gezeigt, hat deshalb insbesondere in den letzten Gerüsten der Fertigwalzstraße besonders negativen Einfluss auf den Kantenbereich des zu walzenden Metallbandes.

Beide beschriebenen Effekte, d. h. sowohl die Erhöhung des Walzdrucks, siehe Figur 8c), wie auch der zunehmende Verschleiß mit steigender Walzprogrammlänge, siehe Figur 8d) führen zu dem unerwünschten Effekt des steileren Bandkantenabfalls, d. h. der "Bandkantenanschärfung".

d)

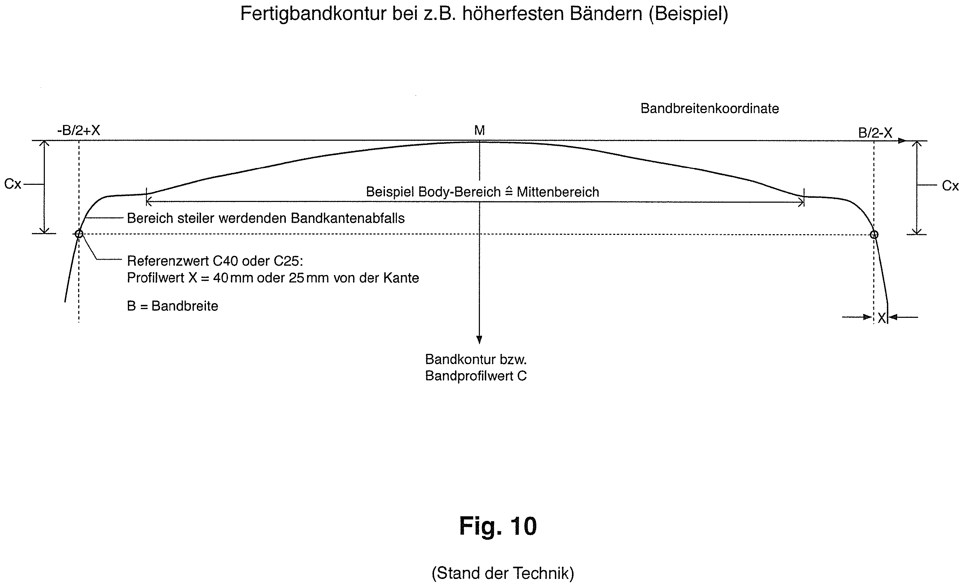

In vielen Fällen und besonders bei obigen Randbedingungen kann sich deshalb der Bandkantenabfall bzw. der zunehmende Bandkantenabfall von Stich zu Stich bzw. von Gerüst zu Gerüst in Abständen X mit z. B. X=40 oder X=25, d. h. 40 oder 25 mm von der Bandkante auswirken, wie dies in Figur 10 veranschaulicht ist. Sowohl die Bandkontur zwischen der Bandmitte und dem jeweils zugehörigen Profilreferenzwert $C_x$ als auch die Bandkantenwanderung von Stich zu Stich sowie die Mittenplanheitsform haben dann keine rein parabolische Form mehr.

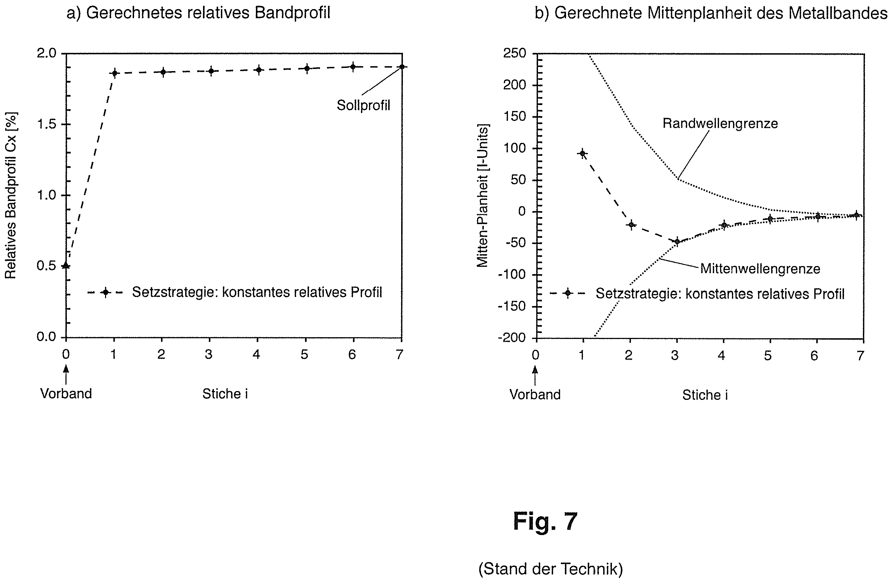

Bei diesen Bedingungen führt die Strategie nach dem Stand der Technik entsprechend dem europäischen Patent EP 0 591 291 B1 oder der deutschen Patentanmeldung DE 40 40 360 A1 und der Formsteuerungsgraden, bei der das relative Bandprofil z. B. innerhalb einer Fertigwalzstraße und insbesondere an dem Profilreferenzwert $C_{40}$ nahezu konstant gehalten wird, siehe Figur 7a), im Regelfall zu Bodyunplanheiten, d. h. im Mittenbereich - über die Breite des Metallbandes betrachtet - zu Mittenunplanheiten. Diese Unplanheiten, nicht zu verwechseln mit Mittenwellen nach Figur 6) des Metallbandes, sind in Figur 7b) veranschaulicht. Es ist zu erkennen, dass die Mittenplanheit des zu walzenden Metallbandes insbesondere an den Ausgängen der ersten Gerüste der Fertigwalzstraße bei dieser Strategie stark schwankt. Erst beim Durchlaufen der Fertigwalzstraße nehmen die Schwankungen der Mittenplanheit mit zunehmender Gerüstanzahl weiter ab, wobei sich die Mittenplanheit in Form eines Einschwingvorganges der Zielplanheit von 0 am letzten Walzgerüst nähert. Dieses Niveau und diese Veränderung der Planheit im Mittenbereich des Metallbandes innerhalb der Walzstraße beeinträchtigen die Walzstabilität und die Produktqualität.

Die Figuren 7a) und 7b) veranschaulichen das im Stand der Technik, beispielsweise in der EP 0 591 291 B1 beschriebene Prinzip der Formsteuerungsgraden. Konkret ist in Fig. 7a dargestellt, wie, ausgehend von einem relativen Vorbandprofil bzw. Brammenprofil von 0,5 %, das Zielbandprofil von Cx = 1,9 % innerhalb der Fertigwalzstraße eingestellt wird. Bei der konventionellen Setzstrategie nach dem Stand der Technik werden die Profil- und Planheitsstellglieder, die den einzelnen Fertigwalzgerüsten I = 1...7 jeweils zugeordnet sind, jeweils so eingestellt, dass das relative Ziel-Bandprofil Cx an einem vorbestimmten Profilreferenzpunkt für das Metallbandprofil, x mm von der Bandkante (x = 40 mm oder x = 25 mm) nach innen versetzt, realisiert wird. Wie in Figur 7a) gezeigt, gelingt dies nahezu bereits bei dem ersten Fertigwalzgerüst i = 1 und der dort bereits fast erreichte Wert von 1,9 % für das relative Bandprofil wird bei allen nachfolgenden Gerüsten i = 2-7 nahezu konstant eingehalten.

Diese quasi idealtypische Realisierung des Kriteriums "Konstanthalten des relativen Bandprofils" hat jedoch ihren Preis. Dieser Preis bzw. der damit einhergehende Nachteil zeigt sich in Figur 7b) in der Weise, dass die Planheit des Metallbandes im Mittenbereich des Metallbandes, also die Mittenplanheit, insbesondere bei den mittleren Gerüsten der Fertigwalzstraße nicht optimal ist, wie oben beschrieben. Diese Mitten-Unplanheiten können den Bandlauf negativ beeinflussen. Auch wenn die berechneten Mitten-Unplanheiten innerhalb oder an den zulässigen Mittenplanheitstoleranzfenstern liegen, so ist die Setzung nicht optimal und kann bei empfindlichen Bändern stören.

Die europäische Patentanmeldung EP 1 481 742 offenbart ein Verfahren gemäß dem Oberbegriff des Patentanspruchs 1.

Ausgehend von diesem Stand der Technik liegt der Erfindung die Aufgabe zugrunde, ein bekanntes Verfahren zum Ermitteln von Stellgrößen für aktive Profil- und Planheitsstellglieder für mindestens ein Walzgerüst zum Warmwalzen von Metallband dahingehend weiterzubilden, dass das Auftreten von Schwankungen der Mittenplanheit des Metallbandes ab dem Stich k (z. B. k=2) und die daraus resultierenden Nachteile für die Walzstabilität und die Produktqualität vermieden werden.

Diese Aufgabe wird durch das in Patentanspruch 1 beanspruchte Verfahren gelöst. Es ist dadurch gekennzeichnet, dass zusätzlich auch für die Soll-Mittenplanheit des Metallbandes nach einem vorbestimmten Stich k mit i=1 < k < I und für die Soll-Mittenplanheiten nach den nachfolgenden Stichen i mit k<i≤I-1 ebenfalls jeweils stichspezifische Intervallbereiche vorgegeben werden, wobei die Intervallbereiche jeweils innerhalb der Mittenplanheitsgrenzwerte liegen; und dass das sukzessive Berechnen der Stellgrößen für die Profil- und Planheitsstellglieder und der Profil- und Mittenplanheitswerte für das Metallband für die einzelnen Stiche mit Hilfe des technologischen Modells erfolgt unter zusätzlicher Berücksichtigung der jeweils, vorzugsweise eingeengten, vorgegebenen Intervallbereiche für die Soll-Mittenplanheiten des Metallbandes für die Stiche k≤i≤I.

Die Begriffe Body-Planheit, Planheit und Mittenplanheit werden im Rahmen der vorliegenden Beschreibung gleichbedeutend verwendet. Planheiten im unmittelbaren Randbereich eines Metallbandes sind nicht Gegenstand der vorliegenden Erfindung.

Der Begriff "Stich" meint in der vorliegenden Beschreibung immer einen Stich ausgeführt durch ein Walzgerüst mit aktiven Profil- und Planheitsstellglieder. Das schließt nicht aus, dass das Metallband beispielsweise in vorgelagerten Vorgerüsten und/oder in frühen Gerüsten einer Fertigwalzstraße auch bereits Stichen ohne Beeinflussung durch aktive Profil- und Planheitsstellglieder unterzogen wurde.

Der Begriff "prozessbedingte Mittenplanheitsgrenzwerte" meint im oberen Bereich Randwellengrenzwerte und im unteren Bereich Mittelwellengrenzwerte. Der verwendete Begriff "Mittenplanheit" darf nicht dem Begriff "Mittenwelle" verwechselt werden. Bei der Mittenplanheit handelt es sich definitionsgemäß um eine Planheit (bzw. eine Unplanheit), die als Rand- oder Mittenwelle ausgebildet ist oder wirkt. Die Mittenplanheit wird berechnet oder entsteht aus einer Bandkonturänderung während eines Stiches im vornehmlich mittleren Bandbereich in positiver oder negativer Richtung. Prozessabhängige Mittenplanheitsgrenzwerte bedeuten aus prozesstechnischer Sicht nicht optimale Planheiten, die jedoch im Zusammenhang mit einer Kontur- oder Profilveränderung in Abhängigkeit von Dicke, Breite, Material und/oder Stichnummer etc. gerade noch toleriert werden können. Der Begriff Band meint Metallband, insbesondere Stahlband.

Die vorgegebenen Intervallbereiche für die Soll-Mittenplanheiten können auch infinitesimal klein bzw. eng vorgegeben werden, was dann der Vorgabe von singulären Soll-Mittenplanheitswerten für einzelne Stiche gleichkommt.

Durch die erfindungsgemäß gemachten weiteren Vorgaben, konkret dass die Soll-Mittenplanheiten für einzelne Stiche vorzugsweise Null oder/und innerhalb eines vorbestimmen Intervallbereiches liegen sollen, kann das technologische Modell die gewünschten Stellgrößen, Profilwerte und Mittenplanheitswerte präziser berechnen, wodurch die Schwankungen der Mittenplanheit des Metallbandes ab dem Stich k und die daraus resultierenden Nachteile für die Walzstabilität und die Produktqualität vermieden werden können.

Weitere vorteilhafte Ausführungsformen des erfindungsgemäßen Verfahrens sind Gegenstand der abhängigen Ansprüche. Die einleitend beschriebenen Begriffe aus dem Stand der Technik gemäß den Figuren 3 bis 10 gelten für die nachfolgende Beschreibung der Erfindung gleichermaßen.

Der Beschreibung sind 10 Figuren beigefügt, wobei

| Figuren 1 | ein Flussdiagramm zur Veranschaulichung des erfindungsgemäßen Verfahrens; |
|---|---|
| Figuren 2a) und b) | eine Gegenüberstellung des erfindungsgemäßen Verfahrens und einer bekannten Vorgehensweise aus dem Stand der Technik jeweils zum Einstellen von Profil- und Mittenplanheitswerten sowie von Stellgrößen für aktive Profil- und Planheitsstellglieder für ein Walzgerüst; |
| Figur 3 | eine schematische Darstellung einer Fertigwalzstraße und deren Profilstellglieder zum Warmwalzen von Metallband gemäß dem Stand der Technik; |
| Figur 4 | das Continuous Variable Crown CVC-Prinzip (Stand der Technik); |
| Figur 5 | den Begriff des Profils für ein zu walzendes Metallband (Stand der Technik); |
| Figur 6 | den Begriff der Welligkeit bzw. gleichbedeutend mit der Mittenplanheit des Metallbandes (Stand der Technik); |
| Figur 7 | das konventionelle Verfahren zum Ermitteln von Profil- und Mittenplanheitswerten sowie von Stellgrößen für aktive Profil- und Planheitsstellglieder für Walzgerüste, beispielsweise in einer Fertigwalzstraße, wobei dieses konventionelle Verfahren darauf abzielt, ein relatives Bandprofil für das Metallband möglichst konstant zu halten (Stand der Technik); |
| Figur 8 | Walzparameter bei höherfesten Bändern (Stand der Technik); |
| Figur 9 | die Auswirkungen von verschlissenen bzw. stark abgenutzten Arbeitswalzen auf den Kantenbereich eines zu walzenden Metallbandes gemäß dem Stand der Technik; und |
| Figur 10 | die Kontur eines fertiggewalzten Metallbandes mit unerwünschter Bandkantenanschärfung (Stand der Technik); |

veranschaulicht.

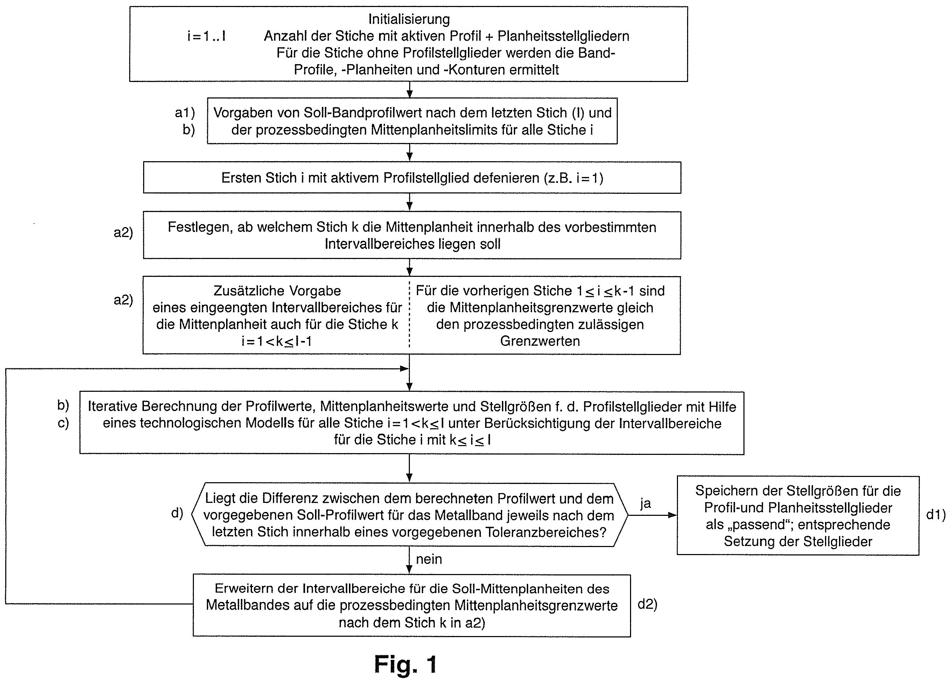

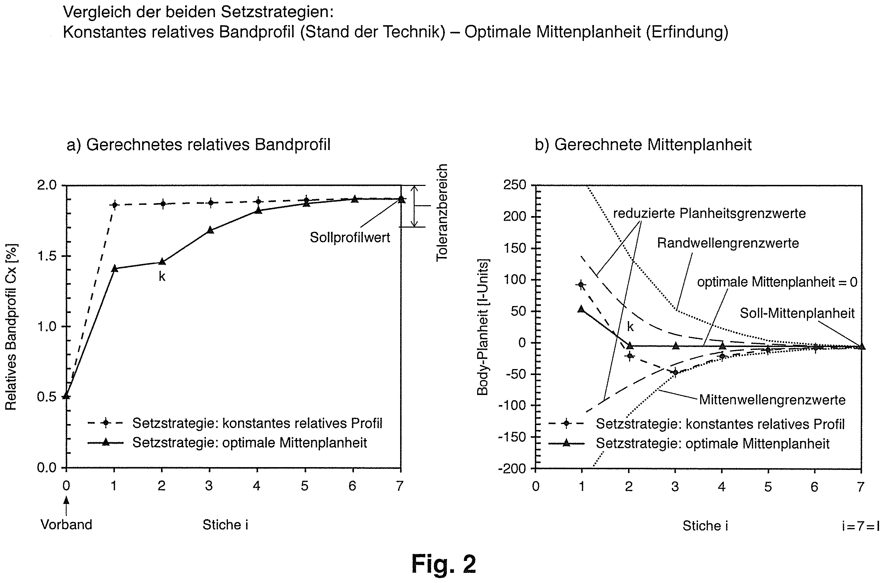

Die Erfindung wird nachfolgend unter Bezugnahme auf die genannten Figuren 1 und 2 in Form von Ausführungsbeispielen detailliert beschrieben.

Die Erfindung betrifft ein Verfahren zum Ermitteln von Profil- und Mittenplanheitswerten sowie von Stellgrößen für aktive Profil- und Planheitsstellglieder für mindestens ein Walzgerüst zum Warmwalzen von Metallband. Das Warmwalzen erfolgt mit einer Mehrzahl von $i=1...I$ aufeinanderfolgenden Stichen. Das Verfahren weist erfindungsgemäß folgende Schritte auf, siehe auch Figur 1:

Gemäß Schritt a1) werden zunächst der Soll-Profilwert und der Soll-Mittenplanheitswert für das Metallband nach dem letzten Stich und prozessbedingte Mittenplanheitsgrenzwerte für das Metallband nach den einzelnen Stichen i vorgegeben, wobei für die Soll-Mittenplanheit nach dem letzten Stich ein Intervallbereich vorgegeben wird, welcher innerhalb der prozessbedingten Mittenplanheitsgrenzwerte liegt oder von diesen begrenzt wird.

Gemäß Schritt b) werden diese Vorgaben in ein technologisches Modell zur Simulation des Warmwalzvorganges eingegeben. Erfindungsgemäß ist vorgesehen, dass zusätzlich auch für die Soll-Mittenplanheiten des Metallbandes nach einem vorbestimmten Stich $k$ mit $i=1...<k<...I$ sowie für die Soll-Mittenplanheiten für die nachfolgenden Stiche mit $k<i:\leq I-1$ stichspezifische Intervallbereiche vorgegeben werden. (Verfahrensschritt a2). Erfindungsgemäß erfolgt dann das Berechnen der Stellgrößen für die Profil- und Planheitsstellglieder sowie das Berechnen des mindestens einen Profil- und Mittenplanheitswertes für das Metallband für die einzelnen Stiche mit Hilfe des technologischen Modells unter Berücksichtigung aller jeweils vorgegebenen Intervallbereiche für die Soll-Mittenplanheiten des Metallbandes für die Stiche $k\leq i\leq I$. Die erfindungsgemäße Berechnung muß ausdrücklich auch noch einmal für den Stich I durchgeführt werden, weil sich dessen Werte aufgrund der Berechnungen für die vorausgegangenen Stiche geändert haben können.

Vor der sukzessiven Berechnung der Stellgrößen für die Profil- und Planheitsstellglieder ist es sinnvoll, wenn zunächst der erste Stich ($i=1$)- bzw. in einer Fertigwalzstraße das erste Walzgerüst - bestimmt wird, bei welchem überhaupt aktivierbare Profil- und Planheitsstellglieder verfügbar sind; siehe den Initialisierungsschritt oben in Figur 1. Typischerweise steht dieses erste Gerüst baulich und funktionell fest und typischerweise handelt es sich dabei auch tatsächlich um das erste Walzgerüst in einer Fertigwalzstraße. Das muss jedoch nicht zwingend notwendig so sein, denn dem ersten Walzgerüst mit aktivierbaren Profil- und Planheitsstellgliedern können auch andersartige Walzgerüste ohne aktivierbare Profil- und Planheitsstellglieder vorgeschaltet sein.

Weiterhin muss vor der sukzessiven Berechnung der Stellgrößen auch derjenige Stich $k$ aus der Menge $i=1...<k<...I$ bestimmt werden, ab welchem die Soll-Mittenplanheit des Metallbandes als in dem vorbestimmten Intervallbereich liegend vorgegeben werden soll; siehe den zweiten Verfahrensschritt nach der Initialisierung in Figur 1. Vorzugsweise erfolgt dies erfindungsgemäß bereits ab dem zweiten und bei den nachfolgenden Stichen bzw. Walzgerüsten.

Mit diesen Vorgaben erfolgt dann - wie gesagt - die Berechnung der Stellgrößen für die Profil- und Planheitsstellglieder sowie die Berechnung des mindestens einen Profil- und Mittenplanheitswertes für das Metallband nach den einzelnen Stichen mit Hilfe des technologischen Modells. Besonders bevorzugt wird bei erstem Durchlauf der Simulation der Intervallbereich für die Soll-Mittenplanheiten ab dem zweiten Stich auf Null oder nahe Null oder geringer als die halben Werte der technologischen Mittenplanheitslimits gesetzt.

Diese beschriebene und insbesondere gemäß Anspruch 1 beanspruchte Vorgehensweise bietet den Vorteil, dass die Mittenplanheit des zu walzenden Bandes bereits sehr frühzeitig, idealerweise bereits hinter dem zweiten Fertigwalzgerüst mit aktiven Profil- und Planheitsstellgliedern innerhalb der Fertigstraße - bzw. idealerweise nach dem dritten Verfahrensschritt, welcher mit aktiven Profil- und Planheitsstellgliedern durchgeführt wurde - innerhalb des vorbestimmten Intervallbereiches, vorzugsweise bei Null liegt; siehe die durchgezogene mit schwarzen Dreiecken gekennzeichnete Linie "Setzstrategie optimale Mittenplanheit" in Figur 2b).

Dies setzt zwar voraus, dass an dem vorgelagerten, typischerweise dem ersten, Walzgerüst in der Fertigwalzstraße bzw. bei dem ersten Stich ein großer Stellbereich für die Profilstellglieder vorgesehen werden muss, welcher, wenn er ausgeschöpft werden sollte, auch größere Mittenplanheitswerte, insbesondere größere Rand- und Mittenwelligkeiten bei dem zu walzenden Metallband am Ausgang des ersten Fertigwalzgerüstes zur Folge hat. Dies ist jedoch unkritisch, weil für die ersten Fertigwalzgerüste, insbesondere für das erste Fertigwalzgerüst bzw. für den ersten Stich die prozessbedingt vorgegebenen Mittenplanheitsgrenzwerte, insbesondere für die Rand- und Mittenwelligkeit des Metallbandes noch weit offen sind. Typischerweise sind die Grenzen für das erste Walzgerüst so weit gefasst, dass selbst bei voller Ausnutzung des Stellbereichs der Profilstellglieder die weiten Grenzen Mittenplanheit bei dem Metallband nicht erreicht werden; siehe Figur 2b). Dies hat wiederum den Vorteil, dass im Hinblick auf die vorgegebenen Mittenplanheitsgrenzwerte für die Folgestiche auch noch genügend Reserve vorhanden ist, um auf eventuelle Störeinflüsse reagieren zu können, ohne dass dabei die Mittenplanheitsgrenzwerte für die Rand- und Mittenwelligkeit überschritten werden müssten.

Figur 2a) zeigt mit der Linie "Setzstrategie = optimale Mittenplanheit" den Effekt, der für das erfindungsgemäß gewünschte schnelle Erreichen der Soll-Mittenplanheit innerhalb der Fertigwalzstraße bzw. bei frühen Stichen in Kauf genommen werden muss. Konkret wird das schnelle Erreichen der Soll-Mittenplanheit erreicht mit einer vergleichsweise langsameren Annäherung der simulierten bzw. berechneten relativen Profilwerte an die vorgegebene Soll-Profilwerte, insbesondere am Ausgang des letzten Fertigwalzgerüstes in der Fertigwalzstraße bzw. bei dem letzten Stich. Dies wird jedoch in Kauf genommen, da es praktisch nicht relevant ist.

Die gestrichelten Linien "Setzstrategie = konstantes relatives Profil" zeigen demgegenüber in Figur 2a) den Verlauf des relativen Bandprofils bzw. der Profilwerte und in Figur 2b) den Verlauf der Body- bzw. Mittenplanheit bei dem zu walzenden Metallband innerhalb der Fertigwalzstraße mit den Walzgerüsten 1 - 7 bzw. bei den Stichen i=1-7 gemäß dem Stand der Technik, wie oben beschrieben.

Gemäß einem ersten Ausführungsbeispiel der Erfindung erfolgt die besagte sukzessive Berechnung der Stellgrößen für die Profil- und Planheitsstellglieder sowie die Berechnung des mindestens einen Profilwertes und des Mittenplanheitswertes für das Metallband auch unter der zusätzlichen Maßgabe, dass die Differenz zwischen dem berechneten Profilwert und dem vorgegebenen Soll-Profilwert für das Metallband nach einem Stich, insbesondere nach dem letzten Stich, innerhalb eines vorgegebenen Toleranzbereiches, der vorzugsweise ebenfalls zu Null vorgegeben wird, liegt (Verfahrensschritt d); siehe Figur 1.

Das Warmwalzen des Metallbandes kann entweder in einer Fertigwalzstraße mit einer Mehrzahl von Fertigwalzgerüsten mit aktiven Profil- und Planheitsstellgliedern oder mit einem Reversierwalzgerüst erfolgen. In der Fertigwalzstraße führt jedes Fertigwalzgerüst einen eigenen Stich aus. Bei dem Reversierwalzgerüst üben dieselben Arbeitswalzen die aufeinanderfolgenden Stiche auf das Metallband aus.

Das Vorhandensein von leistungsstarken Profil- und Planheitsstellgliedern insbesondere an dem Gerüst für den ersten Stich, sei es in einer Fertigwalzstraße oder bei einem Reversiergerüst - ermöglicht vorteilhafterweise die Einhaltung der beiden folgenden (Rand-) Bedingungen bzw. Vorgaben:

1. Es kann erreicht werden, dass die berechnete bzw. simulierte Mittenplanheit bereits ab dem k-ten Stich, vorzugsweise ab dem k = 2'ten Stich, innerhalb eines erfindungsgemäß vorbestimmten Intervallbereiches für die Soll-Mittenplanheit liegt. Besonders bevorzugt liegt die Mittenplanheit bereits ab dem k=2'ten Stich bei oder nahe Null oder innerhalb der technologischen Mittenplanheitslimits.

2. Es kann weiterhin erreicht werden, dass der berechnete bzw. simulierte Profilwert für das Metallband nach dem letzten Stich innerhalb eines vorbestimmten Toleranzbereiches für den Soll-Profilwert nach dem letzten Stich liegt. Der Toleranzbereich, d.h. auch der Toleranzbereich für die Differenz zwischen dem Soll-Profilwert und dem berechneten bzw. simulierten Profilwert, liegt beispielsweise bei $0\mu m$ bis $+/-10\mu m$, vorzugsweise bei $0\mu m$ bis $+/-3\mu m$

oder idealerweise bei 0μm.

Lediglich in seltenen Fällen muss bei dem zweiten Stich noch eine Korrektur des Bandprofils und damit vor allem eine Mittenunplanheit, d.h. eine Mittenplanheit außerhalb des vorbestimmten Intervallbereiches, in Kauf genommen werden.

Die auf diese Weise mit Hilfe des technologischen Modells ermittelten Stellgrößen für die Profil- und Planheitsstellglieder, welche die Einhaltung der beiden Bedingungen ermöglichen bzw. gewährleisten, werden als "passend" abgespeichert bzw. zur Setzung der Walzstraße verwendet.

Stellt sich dagegen bei einem ersten Durchlauf der Simulation heraus, dass die zur Einhaltung der beiden genannten Bedingungen erforderlichen Stellgrößen außerhalb ihrer Limits liegen oder liegt bei Verwendung bestimmter Stellgrößen die Differenz zwischen dem berechneten Profil nach dem letzten Stich und dem vorgegebenen Soll-Profilwert des Metallbandes außerhalb der Toleranz bzw. des Toleranzbereiches, dann werden die bisher vorgegebenen Intervallbereiche für die Soll-Mittenplanheit des Metallbandes für unmittelbar nach dem Stich k in Schritt a2) vorzugsweise auf die prozessbedingten Mittenplanheitsgrenzwerte erweitert. Die iterative bzw. sukzessive Berechnung der Profil- und Planheitsstellgrößen wird dann mit den geänderten Randbedingungen iterativ wiederholt. Dies erfolgt so lange bis der Soll-Profilwert für das Metallband nach dem letzten Stich erreicht ist oder bis die Soll-Mittenplanheiten des Metallbandes für alle Folgestiche erweitert wurden. Anders ausgedrückt: Die iterative bzw. sukzessive Berechnung der Stellgrößen für die aktiven Profil- und Planheitsstellglieder zur Optimierung von deren Einstellung erfolgt so lange, bis die Differenz zwischen dem berechneten Profilwert und dem vorgegebenen Soll-Profilwert insbesondere für den letzten Stich im Toleranzbereich liegt oder bis die Soll-Profilwerte für alle Stiche auf die Mittenplanheitsgrenzwerte erweitert wurden.

Der Intervallbereich für die Soll-Mittenplanheit nach einem einzelnen Stich wird beispielsweise vorgegeben zu 0% bis +/- 50%, bevorzugt zu 0% bis +/- 25% und besonders bevorzugt zu 0% des jeweils prozessbedingt vorgegebenen Mittenplanheitsgrenzwertes nach dem jeweiligen Stich.

Der berechnete Profilwert und der vorgegebene Soll-Profilwert beziehen sich jeweils auf dieselbe vorbestimmte Entfernung X, mit beispielsweise X=25mm oder X=40mm, in Breitenrichtung von der Kante des Metallbandes nach innen versetzt. Bei dem berechneten Profilwert und dem vorgegebenen Soll-Profilwert kann es sich jeweils entweder um absolute oder relative Profilwerte handeln; siehe Figur 5.

In Schritt c) können weiterhin die Stellgrößen für die Profil- und Planheitsstellglieder für jeden Stich iterativ so berechnet werden, dass nach jedem Stich die berechnete Mittenplanheit mit der vorbestimmten Soll-Mittenplanheit möglichst gut übereinstimmt.

Neben den Parametern Mittenplanheit und Profilwert kann auch der Parameter Kontur des Metallbandes bei der erfindungsgemäßen Ermittlung von Stellgrößen mit berücksichtigt werden. Dazu wird in Schritt a1) auch eine Soll-Kontur für das Metallband nach den einzelnen Stichen vorgegeben und es wird in Schritt c) auch die Bandkontur des Metallbandes nach jedem Stich berechnet. Schließlich werden dann in dem Schritt c) mit Hilfe des technologischen Modells die Stellgrößen für die Profil- und Planheitsstellglieder für jeden Stich iterativ so berechnet, dass nach jedem Stich die berechnete Bandkontur mit einer vorbestimmten Soll-Kontur möglichst gut übereinstimmt.

Für die Ermittlung der Mittenplanheit des Metallbandes nach einem Stich stehen die folgenden Optionen zur Verfügung:

a) Auswerten des parabolischen Anteils der berechneten Bandverlängerung $\Delta L/L$ über die Breite des Metallbandes;
b) wie a), aber mit stärkerer Wichtung der Bandverlängerungen im mittleren Bereich des Metallbandes als im Bereich der Kante des Metallbandes;
c) Auswerten der Differenz zwischen den relativen Profilwerten an den Stichen i und i-1, jeweils an einem festen/gleichen Bezugspunkt a>X in Breitenrichtung weiter nach innen von der Kante des Metallbandes entfernt;
d) arithmetische Mittelung der berechneten Bandverlängerung $\Delta L/L$ von verschiedenen Berechnungspunkten über einen definierten Breitenbereich, vorzugsweise über den mittleren Breitenbereich;
und/oder
e) Auswerten der Differenz zwischen den berechneten relativen Profilen an bzw. nach den Stichen i und i-1, jeweils an einem variablen Bezugspunkt mit a>X in Breitenrichtung weiter nach innen von der Kante des Metallbandes entfernt, wobei a in Abhängigkeit der Bandbreite, der Dicke des Metallbandes und der Materialqualität gewählt wird.

Bei den Profil- und Planheitsstellgliedern kann es sich beispielsweise handeln um Einrichtungen zum axialen Verschieben von S-förmigen profilierten Arbeitswalzen, was einer Änderung des Arbeitswalzencrowns entspricht; siehe Figur 4. Alternativ oder zusätzlich kann es sich um Einrichtungen zum Kreuzen der Arbeitswalzen und/oder um Biegeeinrichtungen zum Biegen der Arbeitswalzen handeln; siehe Figur 3.

Die effektive Wirksamkeit eines Profil- oder Planheitsstellgliedes kann mit einer äquivalenten Änderung des Arbeitswalzencrowns $\Delta C_{AW}$ quantifiziert werden. Der Einstellbereich eines Arbeitswalzencrowns $\Delta C_{AW}$, der bevorzugt an mindestens dem ersten Walzgerüst mit Profilstellgliedern erzeugt werden kann, sollte folgender Bedingung genügen:

$$\Delta C_{AW} > K_{AW} \cdot BL^2$$

mit

$K_{AW}$ = 0,14mm/m$^2$ oder besonders bevorzugt $K_{AW}$=0,18mm/m$^2$ als Faktor

$\Delta C_{AW}$ in mm:     Arbeitswalzencrown-Einstellbereich = max. AW-Crown - min AW-Crown (Parabolischer Anteil bezogen auf die AW-Ballenlänge als Referenzbreite)

BL in m:     Arbeitswalzen-Ballenlänge

Alternativ oder zusätzlich ist ein äquivalenter Walzspaltprofil-Einstellbereich $\Delta C_{WS}$ für die Wirksamkeit der Summe von Stellgliedern eines Walzgerüstes von:

$$\Delta C_{WS} > K_B \cdot B_{max}^2$$

mit
$K_B$=0,16mm/m$^2$ oder besonders bevorzugt $K_B$=0,2mm/m$^2$ als Faktor

$\Delta Cws$ in mm:     Änderung des Walzspaltprofils bei Änderung der Stellposition des Profilstellgliedes oder -stellglieder des Gerüstes zwischen dem min./max. Einstellbereich (berechnete Werte ohne Berücksichtigung der Wechselwirkung mit dem Band am Bandprofilreferenzpunkt z. B. X=40mm oder X=25mm von der Bandkante nach innen versetzt)

$B_{max}$ in m:     maximale nominelle Bandbreite

bevorzugt an mindestens dem ersten Walzgerüst mit Profilstellgliedern zu erzeugen.

Selbstverständlich können die gemäß dem erfindungsgemäßen Verfahren theoretisch, d. h. mit Hilfe des technologischen Modells simulierten Stellgrößen für die Profil- und Planheitsstellglieder auch in der Praxis eingesetzt werden. Dazu werden diese simulierten und als optimal bzw. passend beurteilten Stellgrößen an den realen Walzgerüsten eingestellt und anschließend wird das Metallband mit den entsprechend eingestellten Walzgerüsten in einer Fertigwalzstraße oder in einem Reversierwalzgerüst warmgewalzt. Die für die einzelnen Stiche vorgegebenen zulässigen absoluten Wertebereiche für die Stellgrößen der Profil- und Planheitsstellglieder werden typischerweise vom ersten zum letzten Stich - in Walzrichtung gesehen - kleiner.

## Patentansprüche

1. Verfahren zum Ermitteln von Stellgrößen für aktive Profil- und Planheitsstellglieder für mindestens ein Walzgerüst zum Warmwalzen von Metallband mit einer Mehrzahl von i= 1... I aufeinanderfolgenden Stichen, wobei für jeden Stich die aktiven Profil- und Planheitsstellglieder individuell einstellbar sind, und zum Ermitteln von Profil- und Mittenplanheitswerten für das warmgewalzte Metallband; aufweisend folgende Schritte:

   a1) Vorgeben des Soll-Profilwertes und der Soll-Mittenplanheit nach dem letzten Stich und von prozessbedingten Mittenplanheitsgrenzwerten für das Metallband nach den einzelnen Stichen i, wobei für die Soll-Mittenplanheit nach dem letzten Stich ein Intervallbereich oder ein singulärer Soll-Mittenplanheitswert vorgegeben wird;
   b) Eingeben der Vorgaben in ein technologisches Modell zur Simulation des Warmwalzens; und
   c) sukzessives Berechnen der Stellgrößen für die aktiven Profil- und Planheitsstellglieder und von mindestens einem Profil- (Cx) und Mittenplanheitswert für die einzelnen Stiche i mit Hilfe des technologischen Modells auf Basis der Vorgaben;
   **dadurch gekennzeichnet, dass**
   a2) zusätzlich auch für die Soll-Mittenplanheit des Metallbandes nach einem vorbestimmten Stich k mit i=1 < k < I und für die Soll-Mittenplanheiten nach den nachfolgenden Stichen i mit k<i≤I-1 ebenfalls jeweils stichspezifische Intervallbereiche vorgegeben werden, wobei die Intervallbereiche jeweils innerhalb der Mittenplanheitsgrenzwerte liegen; und
   c) das sukzessive Berechnen der Stellgrößen für die Profil- und Planheitsstellglieder und der Profil- und Mittenplanheitswerte für das Metallband für die einzelnen Stiche mit Hilfe des technologischen Modells erfolgt unter zusätzlicher Berücksichtigung der jeweils, vorzugsweise eingeengten, vorgegebenen Intervallbereiche für die Soll-Mittenplanheiten des Metallbandes für die Stiche k≤i≤I.

**2.** Verfahren nach Anspruch 1,
**gekennzeichnet durch**

d) Prüfen, vorzugsweise mit Hilfe des technologischen Modells, ob die Differenz zwischen dem berechneten Profilwert und dem vorgegebenen Soll-Profilwert für das Metallband jeweils nach einem Stich, insbesondere nach dem letzten Stich, innerhalb eines vorgegebenen Toleranzbereiches liegt; und

d1) wenn die Differenz innerhalb des Toleranzbereiches liegt:
Speichern der Stellgrößen für die Profil- und Planheitsstellglieder als "passend"; oder
d2) wenn die Differenz außerhalb des Toleranzbereiches liegt:

Erweitern des Intervallbereiches für die Soll-Mittenplanheit des Metallbandes nach dem Stich k in Schritt a2) vorzugsweise auf die prozessbedingten Mittenplanheitsgrenzwerte; und
iteratives Wiederholen der Schritte c) und d1), d2) mit der sukzessiven individuellen Erweiterung des Intervallbereiches für jeweils einen Folgestich k=k+1 solange, bis die Differenz innerhalb des Toleranzbereiches liegt oder die Iteration am letzten Gerüst endet.

**3.** Verfahren nach den Ansprüchen 1 und 2,
**dadurch gekennzeichnet, dass**
der Intervallbereich für die Soll-Mittenplanheit nach einem einzelnen Stich vorgegeben wird zu 0% bis +/- 50%, bevorzugt zu 0% bis +/- 25% und besonders bevorzugt zu 0% des jeweils prozessbedingt vorgegebenen Mittenplanheitsgrenzwertes nach dem jeweiligen Stich.

**4.** Verfahren nach einem der vorangegangenen Ansprüche,
**dadurch gekennzeichnet, dass**
es sich in Schritt a2) bei dem frühesten/ersten vorbestimmten Stich k, für welchen der Sollwert für die Mittenplanheit des Metallbandes vorgegeben wird,
um den zweiten Stich mit k=2 handelt.

**5.** Verfahren nach einem der vorangegangenen Ansprüche,
**dadurch gekennzeichnet, dass**
sich der berechnete Profilwert und der vorgegebene Soll-Profilwert für das Metallband jeweils auf dieselbe vorbestimmte Entfernung X, beispielsweise X=25mm oder X=40mm in Breitenrichtung nach Innen versetzt von der Kante des Metallbandes beziehen.

**6.** Verfahren nach einem der vorangegangenen Ansprüche,
**dadurch gekennzeichnet, dass**
es sich bei dem berechneten Profilwert und dem vorgegebenen Soll-Profilwert jeweils entweder um absolute oder relative Profilwerte handelt.

**7.** Verfahren nach einem der vorangegangenen Ansprüche,
**dadurch gekennzeichnet, dass**
in Schritt c) weiterhin die Stellgrößen für die Profil- und Planheitsstellglieder für jeden Stich iterativ so berechnet werden, dass nach jedem Stich die berechnete Mittenplanheit in dem vorbestimmten Intervallbereich für die Soll-Mittenplanheit liegt.

**8.** Verfahren nach einem der vorangegangenen Ansprüche,
**dadurch gekennzeichnet, dass**

in Schritt a1) auch eine Soll-Kontur für das Metallband nach den einzelnen Stichen vorgegeben wird;
in Schritt c) auch die Bandkontur des Metallbandes nach jedem Stich berechnet wird; und
in Schritt c) weiterhin die Stellgrößen für die Profil- und Planheitsstellglieder für jeden Stich iterativ so berechnet werden, dass nach jedem Stich die berechnete Bandkontur mit der vorbestimmten Soll-Kontur möglichst gut übereinstimmt.

**9.** Verfahren nach einem der vorangegangenen Ansprüche,
**dadurch gekennzeichnet, dass**
die Mittenplanheit des Metallbandes nach einem Stich mit einer der folgenden Optionen ermittelt werden kann:

a) Auswerten des parabolischen Anteils der berechneten Bandverlängerung ΔL/L über die Breite des Metallbandes;

b) wie a), aber mit stärkerer Gewichtung der Bandverlängerungen im mittleren Bereich des Metallbandes als im Bereich der Kante des Metallbandes;

c) Auswerten der Differenz zwischen den relativen Profilwerten des Metallbandes nach den Stichen i und i-1, jeweils an einem festen/gleichen Bezugspunkt a>X in Breitenrichtung weiter nach innen von der Kante des Metallbandes entfernt;

d) arithmetische Mittelung der berechneten Bandverlängerung ΔL/L von verschiedenen Berechnungspunkten über einen definierten Breitenbereich, vorzugsweise über den mittleren Breitenbereich; und/oder

e) Auswerten der Differenz zwischen den berechneten relativen Profilwerten des Metallbandes nach den Stichen i und i-1, jeweils an einem variablen Bezugspunkt mit a>X in Breitenrichtung weiter nach innen von der Kante des Metallbandes entfernt, wobei a in Abhängigkeit der Bandbreite, der Dicke des Metallbandes und der Materialqualität gewählt wird.

**10.** Verfahren nach einem der vorangegangenen Ansprüche,
**dadurch gekennzeichnet, dass**
es sich bei den Profil- und Planheitsstellgliedern beispielsweise handelt um:

Einrichtungen zum axialen Verschieben von S-förmig profilierten Arbeitswalzen, was einer Änderung des Arbeitswalzencrowns ΔCAW entspricht;
Einrichtungen zum Kreuzen der Arbeitswalzen; und/oder Biegeeinrichtungen zum Biegen der Arbeitswalzen.

**11.** Verfahren nach Anspruch 10,
**dadurch gekennzeichnet, dass**
bei Verwendung der Einrichtung zum axialen Verschieben der S-förmig profilierten Arbeitswalze vorzugsweise zumindest an dem ersten Walzgerüst mit aktiven Profil- und Planheitsstellglieder gilt:

$$\Delta C_{AW} > K_{AW} \cdot BL^2$$

mit
$K_{AW}$ = 0,14mm/m$^2$ oder besonders bevorzugt $K_{AW}$ = 0,18mm/m$^2$ als Faktor

$\Delta C_{AW}$ in mm: Arbeitswalzencrown-Einstellbereich = max. AW-Crown - min AW-Crown (Parabolischer Anteil bezogen auf die AW-Ballenlänge als Referenzbreite)
BL in m: Arbeitswalzen-Ballenlänge

**12.** Verfahren nach Anspruch 10 oder 11,
**dadurch gekennzeichnet, dass**
bei Verwendung der Einrichtung zum axialen Verschieben der S-förmig profilierten Arbeitswalze vorzugsweise zumindest an dem ersten Walzgerüst mit aktiven Profil- und Planheitsstellgliedern ein äquivalenter Walzspaltprofil-Einstellbereich ΔCws für die Summe der Profil- und Planheitsstellglieder des Walzgerüstes erzeugt wird zu:

$$\Delta C_{WS} > K_B \cdot B_{max}^2$$

mit
$K_B$ = 0,16mm/m$^2$ oder besonders bevorzugt $K_B$ = 0,20 mm/m$^2$ als Faktor

$\Delta C_{WS}$ in mm: Änderung des Walzspaltprofils bei Änderung der Stellposition des Profilstellgliedes oder -stellglieder des Gerüstes zwischen dem min./max. Einstellbereich (berechnete Werte ohne Berücksichtigung der Wechselwirkung mit dem Band am Bandprofilreferenzpunkt z. B. X=40mm oder X=25mm von der Bandkante)
$B_{max}$ in m: maximale nominelle Bandbreite

**13.** Verfahren nach einem der Ansprüche 2 bis 12;
**gekennzeichnet durch**

f) Einstellen der Profil- und Planheitsstellglieder mit den ermittelten bzw. den als "passend" gespeicherten Stellgrößen; und

g) Warmwalzen des Metallbandes mit dem mindestens einen Walzgerüst mit den gemäß Schritt f) eingestellten Profil- und Planheitsstellgliedern.

14. Verfahren nach einem der vorangegangenen Ansprüche,
**dadurch gekennzeichnet, dass**
es sich bei dem mindestens einen Walzgerüst um eine Fertigwalzstraße mit mindestens einem Fertigwalzgerüst mit aktiven Profil- und Planheitsstellgliedern handelt, wobei jedes Fertigwalzgerüst beim Warmwalzen des Metallbandes jeweils einen Stich i=1...I ausführt.

15. Verfahren nach Anspruch 14
**dadurch gekennzeichnet, dass**
dem ersten Fertigwalzgerüst mit aktiven Profil- und Planheitsstellgliedern ein oder mehrere Fertigwalzgerüste in der Fertigwalzstraße entgegen der Walzrichtung vorgeschaltet sein können.

16. Verfahren nach Anspruch 14 oder 15,
**dadurch gekennzeichnet, dass**
das erste Fertigwalzgerüst mit aktiven Profil- und Planheitsstellgliedern zu Beginn des Verfahrens bestimmt wird.

17. Verfahren nach einem der Ansprüche 1 bis 13,
**dadurch gekennzeichnet, dass**
es sich bei dem mindestens einen Walzgerüst um ein Reversierwalzgerüst handelt, wobei die Arbeitswalzen des Reversierwalzgerüstes die aufeinander folgenden Stiche i mit i=1...I auf das Metallband ausüben.

18. Verfahren nach einem der vorangegangenen Ansprüche,
**dadurch gekennzeichnet, dass**
die für die einzelnen Stiche vorgegebenen zulässigen absoluten Wertebereiche für die Stellgrößen der Profil- und Planheitsstellglieder vom ersten zum letzten Stich - in Walzrichtung gesehen - kleiner werden.

**Claims**

1. Method of determining setting variables for active profile and planarity setting elements for at least one roll stand for the hot-rolling of metal strip by a plurality of i = 1 ... I successive passes, wherein the active profile and planarity setting elements are individually settable for each pass, and for determining profile and centre planarity values for the hot-rolled metal strips; comprising the following steps:

a1) presetting the target profile value and the target centre planarity after the last pass and centre planarity limit values, which are due to the process, for the metal strip after the individual passes I, wherein an interval range or a singular target centre planarity value is determined for the target centre planarity after the last pass;
b) input of presets into a technological model for simulation of the hot-rolling; and
c) successive computation of the setting variables for the active profile and planarity setting elements and of at least one profile value (Cx) and centre planarity value for the individual passes I with the help of the technological model on the basis of the preset; **characterised in that**
a2) respective pass-specific interval ranges are similarly preset additionally for the target centre planarity of the metal strip after a predetermined pass k, wherein $i = 1 < k < I$, and for the target centre planarities after the successive passes i, wherein $k < i \leq I - 1$, wherein the interval ranges each lie within the centre planarity values; and
c) the successive computation of the setting variables for the profile and planarity setting elements and the profile and centre planarity values for the metal strip is carried out for the individual passes with the help of the technological model with additional consideration of the respective, preferably contracted, preset interval ranges for the target centre planarities of the metal strip for the passes $k \leq i \leq I$.

2. Method according to claim 1,
**characterised by**

d) checking, preferably with the help of the technological model, whether the difference between the computed profile value and the preset target profile value for the metal strip lies within a preset tolerance range each time after a pass, particularly after the last pass; and

d1) if the difference lies within the tolerance range then storing the setting variables for the profile and planarity setting elements as "appropriate" or

d2) if the difference lies outside the tolerance range then widening the interval range for the target centre planarity of the metal strip after the pass k in step a2), preferably to the centre planarity limit values due to the process; and iterative repetition of the step c) and d1), d2) with successive individual widening of the interval range for a respective succeeding pass k = k + 1 as long as the difference lies within the tolerance range or the iteration has ended at the last stand.

3. Method according to claims 1 and 2,
**characterised in that**
the interval range for the target centre planarity is preset after an individual pass as 0% to +/- 50%, preferably 0% to +/- 25% and particularly preferably 0% of the respective preset centre planarity limit value, which is due to process, after the respective pass.

4. Method according to any one of the preceding claims,
**characterised in that**
in step a2) the earliest/first predetermined pass k for which the target value for the centre planarity value of the metal strip is preset is the second pass, wherein k = 2.

5. Method according to any one of the preceding claims,
**characterised in that**
the computed profile value and the preset target profile value for the metal strip each refer to the same predetermined distance X, for example X = 25 mm or X = 40 mm, in width direction inwardly offset from the edge of the metal strip.

6. Method according to any one of the preceding claims,
**characterised in that**
the computed profile value and the preset target profile value are respectively either absolute profile values or relative profile values.

7. Method according to any one of the preceding claims,
**characterised in that**
in step c) the setting variables for the profile and planarity setting elements for each pass are moreover iteratively computed in such a way that after each pass the computed centre planarity value lies in the predetermined interval range for the target centre planarity.

8. Method according to any one of the preceding claims,
**characterised in that**

in step a1) a target contour for the metal strip after the individual passes is also preset;
in step c) the strip contour of the metal strip after each pass is also computed; and
in step c) the setting variables for the profile and planarity setting elements for each pass are in addition iteratively computed in such a way that after each pass the computed strip contour corresponds as well as possible with the predetermined target contour.

9. Method according to any one of the preceding claims,
**characterised in that**
the centre planarity of the metal strip after each pass can be determined by one of the following options:

a) evaluating the parabolic component of the computed strip lengthening $\Delta L/L$ over the width of the metal strip;
b) as a), but with stronger weighting of the strip lengthenings in the middle region of the metal strip than in the region of the edge of the metal strip;
c) evaluating the difference between the relative profile values of the metal strip after the passes i and i - 1, in each instance at a fixed/identical reference point a > X spaced in width direction further inwardly from the edge of the metal strip;
d) arithmetic averaging of the computed strip lengthening $\Delta L/L$ of different computation points over a defined width region, preferably over the middle width region;
and/or

e) evaluating the difference between the computed relative profile values of the metal strip after the passes i and i - 1, in each instance at a variable reference point with a > X spaced in width direction further inwardly from the edge of the metal strip, wherein a is selected in dependence on the strip width, the thickness of the metal strip and the material quality.

10. Method according to any one of the preceding claims,
**characterised in that**

the profile and planarity setting elements are, for example,
devices for axial displacement of S-shape profiled work rolls, which corresponds with a change in the work roll crown $\Delta$CAW;
devices for crossing the work rolls and/or
bending devices for bending the work rolls.

11. Method according to claim 10,
**characterised in that**
in the case of use of the device for axial displacing of the S-shape profiled work roll there preferably applies at least at the first roll stand with active profile and planarity setting elements:

$$\Delta C_{AW} > K_{AW} \cdot BL^2$$

wherein
$K_{AW} = 0.14$ mm/m$^2$ or, particularly preferably, $K_{AW} = 0.18$ mm/m$^2$ as factor

$\Delta C_{AW}$ in mm: work roll crown setting range = max. AW-crown - min. AW-crown (parabolic component referred to the AW barrel length as reference width)
BL in m: work roll barrel length.

12. Method according to claim 10 or 11,
**characterised in that**
in the case of use of the device for axial displacing of the S-shape profiled work roll preferably an equivalent rolling gap profile setting range $\Delta C_{WS}$ for the sum of the profile and planarity setting elements of the roll stand is produced at least at the first roll stand with active profile and planarity setting elements:

$$\Delta C_{WS} > K_B \cdot B_{max}^2$$

wherein
$K_B = 0.16$ mm/m$^2$ or, particularly preferably, $K_B = 0.20$ mm/m$^2$ as factor

$\Delta C_{WS}$ in mm: change in the rolling gap profile in the case of change of the setting position of the profile setting element or setting elements of the stand between the min./max. setting range (computed values without consideration of the interaction with the strip at the strip profile reference point, for example X = 40 mm or X = 25 mm from the strip edge)
$B_{max}$ in m: maximum nominal strip width.

13. Method according to any one of claims 2 to 12,
**characterised by**

f) setting the profile and planarity setting elements with the determined setting variables or setting variables stored as "appropriate"; and
g) hot-rolling the metal strip by the at least one roll stand with the profile and planarity setting elements set in accordance with step f).

14. Method according to any one of the preceding claims,
**characterised in that**
the at least one roll stand is a finishing rolling train with at least one finishing roll stand with active profile and planarity setting elements, wherein each finishing roll stand during hot-rolling of the metal strip performs a respective pass i = 1 ... I.

15. Method according to claim 14,
   **characterised in that**
   one or more finishing roll stands in the finishing rolling train can be arranged upstream, against the rolling direction, of the first finishing roll stand with active profile and planarity setting elements.

16. Method according to claim 14 or 15,
   **characterised in that**
   the first finishing roll stand with active profile and planarity setting elements is determined at the start of the method.

17. Method according to any one of claim 1 to 13,
   **characterised in that**
   the at least one roll stand is a reversing roll stand, wherein the work rolls of the reversing roll stand perform the successive passes i, wherein i = 1 ... I, on the metal strip.

18. Method according to any one of the preceding claims,
   **characterised in that**
   the permissible absolute value ranges, which are preset for the individual passes, for the setting variables of the profile and planarity setting elements can be smaller from the first to the last pass as seen in rolling direction.


**Revendications**

1. Procédé destiné à l'identification de valeurs de réglage pour des organes actifs de réglage du profil et de la planéité pour au moins une cage de laminoir destinée au laminage à chaud d'une bande métallique avec une multitude de i = 1 ...I passes successives ; dans lequel, pour chaque passe, les organes actifs de réglage du profil et de la planéité peuvent être réglés d'une manière individuelle ; ainsi qu'à l'identification de valeurs du profil et de la planéité au centre pour la bande métallique qui a fait l'objet d'un laminage à chaud ; qui présente les étapes suivantes dans lesquelles :

   a1) on spécifie la valeur de consigne du profil et la valeur de consigne de la planéité au centre après la dernière passe et de valeurs limites de la planéité au centre requises par le procédé pour la bande métallique après les passes individuelles i ; dans lequel, pour la planéité de consigne au centre après la dernière passe, on spécifie un écart d'intervalle ou une valeur de consigne singulière de la planéité au centre ;
   b) on introduit les spécifications dans un modèle technologique à des fins de simulation du laminage à chaud ; et
   c) on calcule de manière successive les valeurs de réglage pour les organes actifs de réglage du profil et de la planéité et au moins une valeur du profil (Cx) et de la planéité au centre pour les passes individuelles i à l'aide du modèle technologique sur base des spécifications ;
   **caractérisé en ce que**
   a2) l'on spécifie en outre également, pour la planéité de consigne au centre de la bande métallique après une passe k qui a été prédéfinie en conformité avec l'équation i = 1 < k < I et pour les planéités de consigne au centre après les passes successives i en conformité avec l'équation k < i ≤ I - 1, de même que les écarts d'intervalles respectivement spécifiques à une passe ; dans lequel les écarts d'intervalles se situent respectivement au sein des valeurs limites de la planéité au centre ;
   c) le calcul successif des valeurs de réglage pour les organes de réglage du profil et de la planéité et des valeurs du profil et de la planéité au centre pour la bande métallique pour les passes individuelles à l'aide du modèle technologique a lieu en prenant en outre en compte les écarts d'intervalles respectivement spécifiés, de préférence restreints pour les planéités de consigne au centre de la bande métallique pour les passes k < i < I.

2. Procédé conformément à la revendication 1,
   **caractérisé par**

   d) la vérification du fait de savoir, de préférence à l'aide du modèle technologique, si la différence entre la valeur de profil qui a été calculée et la valeur de consigne du profil qui a été spécifiée pour la bande métallique respectivement après une passe, en particulier après la dernière passe, se trouve au sein d'une plage de tolérances qui a été prédéfinie ; et

d1) lorsque la différence se situe au sein de la plage de tolérances :
la mise en mémoire des valeurs de réglage pour les organes de réglage du profil et de la planéité, qui sont déterminées comme étant « appropriées » ; ou
d2) lorsque la différence se situe en dehors de la plage de tolérances :

l'élargissement de l'écart d'intervalle pour la planéité de consigne au centre de la bande métallique après la passe k à l'étape a2) de préférence aux valeurs limites de la planéité au centre requises par le procédé ; et la répétition itérative des étapes c) et d1), d2) avec l'élargissement individuel successif de l'écart d'intervalle pour respectivement une passe suivante k = k + 1, jusqu'à ce que la différence se situe au sein de la plage de tolérances ou jusqu'à ce que l'itération se termine à la dernière cage.

3. Procédé conformément aux revendications 1 et 2, **caractérisé en ce que** l'on spécifie l'écart d'intervalle pour la planéité de consigne au centre après une passe individuelle à concurrence de 0 % à $\pm$ 50 %, de préférence à concurrence de 0 % $\pm$ 25 %, et de manière particulièrement préférée à concurrence de 0 % de la valeur limite de la planéité au centre qui a été respectivement spécifiée en fonction de l'exigence du procédé, après la passe respective.

4. Procédé conformément à l'une quelconque des revendications précédentes, **caractérisé en ce que**, en ce qui concerne, à l'étape a2), la première passe ou la passe la plus ancienne k qui a été prédéterminée, pour laquelle la valeur de consigne pour la planéité au centre de la bande métallique a été spécifiée, il s'agit de la deuxième passe qui correspond à l'équation k = 2.

5. Procédé conformément à l'une quelconque des revendications précédentes, **caractérisé en ce que** la valeur du profil qui a été calculée et la valeur de consigne du profil qui a été spécifiée pour la bande métallique se rapportent respectivement à la même distance X qui a été prédéterminée, par exemple X = 25 mm ou X = 40 mm dans la direction en largeur, en décalage vers l'intérieur par rapport au bord de la bande métallique.

6. Procédé conformément à l'une quelconque des revendications précédentes, **caractérisé en ce que**, en ce qui concerne la valeur du profil qui a été calculée et la valeur de consigne du profil qui a été spécifiée, il s'agit respectivement soit de valeurs de profil absolues, soit de valeurs de profil relatives.

7. Procédé conformément à l'une quelconque des revendications précédentes, **caractérisé en ce que**, à l'étape c), on calcule en outre les valeurs de réglage pour les organes de réglage du profil et de la planéité pour chaque passe de façon itérative, d'une manière telle qu'après chaque passe, la planéité au centre qui a été calculée se situe dans l'écart d'intervalle qui a été prédéfini pour la planéité de consigne au centre.

8. Procédé conformément à l'une quelconque des revendications précédentes, **caractérisé en ce que**,

à l'étape a1), on spécifie également un contour de consigne pour la bande métallique après les passes individuelles ;
à l'étape c), on calcule également le contour de la bande métallique après chaque passe ; et
à l'étape c), on calcule en outre les valeurs de réglage pour les organes de réglage du profil et de la planéité pour chaque passe de façon itérative d'une manière telle qu'après chaque passe, le contour de la bande qui a été calculé corresponde le mieux possible au contour de consigne qui a été prédéfini.

9. Procédé conformément à l'une quelconque des revendications précédentes, **caractérisé en ce qu'**on peut spécifier la planéité au centre de la bande métallique après une passe avec une des options indiquées ci-après :

a) l'évaluation de la fraction parabolique de l'extension de la bande $\Delta L/L$ qui a été calculée dans le sens de la largeur de la bande métallique ;
b) comme dans a), mais avec une pondération plus marquée des extensions de la bande dans la zone au centre de la bande métallique que dans la zone du bord de la bande métallique ;
c) l'évaluation de la différence entre les valeurs de profil relatives de la bande métallique après les passes i et i - 1, respectivement à un point de référence fixe/identique a > X dans le sens de la largeur, qui est plus éloigné vers l'intérieur par rapport au bord de la bande métallique ;
d) la moyenne arithmétique de l'extension de la bande $\Delta L/L$ qui a été calculée de différents points de calcul sur une zone définie dans le sens de la largeur, de préférence au centre dans le sens de la largeur ;
et/ou

e) l'évaluation de la différence entre les valeurs de profil relatives de la bande métallique qui ont été calculées après les passes i et i - 1, respectivement à un point de calcul variable tel que a > X dans le sens de la largeur, qui est plus éloigné vers l'intérieur par rapport au bord de la bande métallique ; dans laquelle a est sélectionné en fonction de la largeur de la bande, de l'épaisseur de la bande métallique et de la qualité de la matière.

10. Procédé conformément à l'une quelconque des revendications précédentes, **caractérisé en ce que**, en ce qui concerne les organes de réglage du profil et de la planéité, il s'agit par exemple : de dispositifs destinés au déplacement axial de cylindres de travail profilés en forme de S, ce qui correspond à une modification de la ligne de cintrage du cylindre de travail $\Delta$CAW ; des dispositifs pour le croisement des cylindres de travail ; et/ou des dispositifs de cintrage pour le cintrage des cylindres de travail.

11. Procédé conformément à la revendication 10, **caractérisé en ce que**, dans le cas où l'on utilise le dispositif destiné au déplacement axial des cylindres de travail profilés en forme de S, de préférence au moins au niveau de la première cage de laminoir avec des organes actifs de réglage du profil et de la planéité, on se réfère à la formule suivante :

$$\Delta C_{AW} > K_{AW} \cdot BL^2$$

dans laquelle

$K_{AW}$ = 0,14 mm/m$^2$ ou de manière particulièrement préférée $K_{AW}$ = 0,18 mm/m$^2$, à titre de facteur ;
$\Delta C_{AW}$ en mm : zone de réglage de la ligne de cintrage du cylindre de travail = ligne de cintrage AW max. - ligne de cintrage AW min. (fraction parabolique qui se rapporte à la longueur du corps du cylindre AW, à titre de largeur de référence) ;
BL en m : longueur du corps du cylindre de travail.

12. Procédé conformément à la revendication 10 ou 11, **caractérisé en ce que**, dans le cas où l'on utilise le dispositif destiné au déplacement axial des cylindres de travail profilés en forme de S, de préférence au moins au niveau de la première cage de laminoir avec des organes actifs de réglage du profil et de la planéité, on génère une zone de réglage équivalente du profil de l'emprise du cylindre $\Delta$Cws pour la somme des organes de réglage du profil et de la planéité de la cage de laminoir, en se référant à la formule :

$$\Delta C_{WS} > K_B \cdot B_{max}^2$$

dans laquelle

$K_B$ = 0,16 mm/m$^2$ ou de manière particulièrement préférée $K_B$ = 0,20 mm/m$^2$, à titre de facteur ;
$\Delta C_{WS}$ en mm : modification du profil de l'emprise du cylindre lors de la modification de la position de réglage de l'organe de réglage ou des organes de réglage du profil de la cage entre la zone de réglage min./max. (valeurs calculées sans prendre en compte l'interaction avec la bande au point de référence du profil de la bande, par exemple X = 40 mm ou X = 25 mm par rapport au bord de la bande) ;
$B_{max}$ en m : largeur maximale nominale de la bande.

13. Procédé conformément à l'une quelconque des revendications 2 à 12, **caractérisé par** :

f) le réglage des organes de réglage du profil et de la planéité avec les valeurs de réglage qui ont été spécifiées, respectivement qui ont été mises en mémoire en étant déterminées comme étant « appropriées » ; et
g) le laminage à chaud de la bande métallique avec ladite au moins une cage de laminoir équipée des organes de réglage du profil et de la planéité qui ont été réglés en conformité avec l'étape f).

14. Procédé conformément à l'une quelconque des revendications précédentes, **caractérisé en ce que**, en ce qui concerne ladite au moins une cage de laminoir, il s'agit d'un train finisseur qui comprend au moins une cage finisseuse de laminoir équipée d'organes actifs de réglage du profil et de la planéité ; dans lequel chaque cage finisseuse de laminoir, au cours du laminage à chaud de la bande métallique, met en oeuvre respectivement une passe i = 1 ... I.

15. Procédé conformément à la revendication 14, **caractérisé en ce que** l'on peut monter en amont par rapport à la première cage finisseuse de laminoir équipée d'organes actifs de réglage du profil et de la planéité une ou plusieurs cages finisseuses de laminoir dans le train finisseur dans la direction opposée à la direction de laminage.

16. Procédé conformément à la revendication 14 ou 15, **caractérisé en ce que** l'on détermine la première cage finisseuse de laminoir équipée d'organes actifs de réglage du profil et de la planéité au début du procédé.

17. Procédé conformément à l'une quelconque des revendications 1 à 13, **caractérisé en ce que**, en ce qui concerne ladite au moins une cage de laminoir, il s'agit d'une cage de laminoir réversible ; dans lequel les cylindres de travail de la cage de laminoir réversible mettent en oeuvre les passes i qui se suivent les unes les autres avec i = 1 ... I sur la bande métallique.

18. Procédé conformément à l'une quelconque des revendications précédentes, **caractérisé en ce que** les plages de valeurs absolues admissibles, qui ont été spécifiées pour les passes individuelles pour les valeurs de réglage des organes de réglage du profil et de la planéité, diminuent de la première à la dernière passe, lorsqu'on regarde dans la direction de laminage.

Initialisierung
i = 1 .. I    Anzahl der Stiche mit aktiven Profil + Planheitsstellgliedern
Für die Stiche ohne Profilstellglieder werden die Band-
Profile, -Planheiten und -Konturen ermittelt

a1)
b)    Vorgaben von Soll-Bandprofilwert nach dem letzten Stich (I) und
der prozessbedingten Mittenplanheitslimits für alle Stiche i

Ersten Stich i mit aktivem Profilstellglied defenieren (z.B. i = 1)

a2)    Festlegen, ab welchem Stich k die Mittenplanheit innerhalb des vorbestimmten
Intervallbereiches liegen soll

a2)    Zusätzliche Vorgabe
eines eingeengten Intervallbereiches für
die Mittenplanheit auch für die Stiche k
i = 1 < k ≤ I-1

Für die vorherigen Stiche 1 ≤ i ≤ k-1 sind
die Mittenplanheitsgrenzwerte gleich
den prozessbedingten zulässigen
Grenzwerten

b)
c)    Iterative Berechnung der Profilwerte, Mittenplanheitswerte und Stellgrößen f. d. Profilstellglieder mit Hilfe
eines technologischen Modells für alle Stiche i = 1 < k ≤ I unter Berücksichtigung der Intervallbereiche
für die Stiche i mit k ≤ i ≤ I

d)    Liegt die Differenz zwischen dem berechneten Profilwert und dem
vorgegebenen Soll-Profilwert für das Metallband jeweils nach dem
letzten Stich innerhalb eines vorgegebenen Toleranzbereiches?

ja → Speichern der Stellgrößen für die
Profil-und Planheitsstellglieder
als „passend"; entsprechende
Setzung der Stellglieder    d1)

nein

Erweitern der Intervallbereiche für die Soll-Mittenplanheiten des
Metallbandes auf die prozessbedingten Mittenplanheitsgrenzwerte
nach dem Stich k in a2)    d2)

# Fig. 1

Vergleich der beiden Setzstrategien:
Konstantes relatives Bandprofil (Stand der Technik) – Optimale Mittenplanheit (Erfindung)

a) Gerechnetes relatives Bandprofil

b) Gerechnete Mittenplanheit

**Fig. 2**

EP 3 823 771 B1

Durchlaufrichtung des Metallbandes

durch die Fertigwalzstraßen

i = 1

Profil

| F1 | F2 | F3 | F4 | F5 | F8 | F7 |

Planheit

Profil

Walzenverschiebung

Walzenbiegung

CVC mit großen Stellbereichen

CVC mit kleinen Stellbereichen

oder konventionelle Walzenschliffe

**Profilbeeinflussung**

**Konturbeeinflussung Bandkante**

**Planheitsbeeinflussung**

Planheitsregelung

## Fig. 3

(Stand der Technik)

**CVC Prinzip:**
S-Förmiger Walzenschliff
wird axial verschoben

Positiver Crown

Neutraler Crown

Negativer Crown

**Fig. 4**

(Stand der Technik)

Fig. 5

(Stand der Technik)

Änderung der Bandform:

einlaufende Bandform

auslaufende Bandform

Entstehung der Wellen:

Randwellen

Mittenwellen

Bandverlängerungen:

L   ΔL

B

R

M

$i$

parabolische Verteilung der Bandverlängerungen

Wellenforn ≙ Bandplanheit

$$\frac{\Delta L}{L} = \frac{L_R - L_M}{L_M}$$

Randwellen: $\dfrac{\Delta L}{L}$ positiv

Mittenwellen: $\dfrac{\Delta L}{L}$ negativ

## Fig. 6

(Stand der Technik)

## a) Gerechnetes relatives Bandprofil

## b) Gerechnete Mittenplanheit des Metallbandes

Fig. 7

(Stand der Technik)

EP 3 823 771 B1

Walzparameter bei höherfesten Bändern

**Fig. 8**

(Stand der Technik)

Metallband

a)

Arbeitswalzenverschleiß

kurzes Walzprogramm

b)

$R_{AW}$

Arbeitswalzenverschleiß

langes Walzprogramm
(viele Bänder gleicher Breite)

# Fig. 9

(Stand der Technik)

Fertigbandkontur bei z.B. höherfesten Bändern (Beispiel)

Fig. 10

(Stand der Technik)

EP 3 823 771 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0591291 B1
- DE 4040360 A1

- EP 0850704 B1
- EP 1481742 A